# EUROPÄISCHE PATENTANMELDUNG

(11) **EP 4 545 226 A1**
(43) Veröffentlichungstag der Anmeldung: **30.04.2025**
(21) Anmeldenummer: 23206182.0
(22) Anmeldetag: 26.10.2023
(51) Int. Cl.: B23B 31/107, B23B 31/12

(54) **WERKZEUGAUFNAHMEVORRICHTUNG UND EIN DIESE AUFWEISENDES WERKZEUGAUFNAHMESYSTEM**

(71) Anmelder: C. & E. Fein GmbH, 73529 Schwäbisch-Gmünd-Bargau (DE)
(72) Erfinder: Denzel, Sergej, 73527 Schwäbisch Gmünd (DE); Scherrenbacher, Stefan, 73550 Waldstetten (DE)
(74) Vertreter: Wallinger, Michael

(57) **Zusammenfassung**

Die Erfindung betrifft eine Werkzeugaufnahmevorrichtung für ein um eine Rotationsachse rotierbares, eine Planfläche aufweisendes Werkzeug, insbesondere Weldon-Werkzeugaufnahmevorrichtung für ein Fräswerkzeug oder einen Kernbohrer, deren Spannbacke eine Kontaktfläche aufweist, die von der Planflächenseite der Planfläche beabstandet ist und die Planfläche berührt, wenn die Spannbacke in einer zweiten Anordnung der Spannbacke bzw. in der Montageposition des Werkzeugs gegen die Planfläche gedrückt wird. Die Erfindung betrifft auch eine Standwerkzeugmaschine mit dieser Werkzeugaufnahmevorrichtung, ein Werkzeugaufnahmesystem mit dieser Werkzeugaufnahmevorrichtung und dem Werkzeug und ein Verfahren zur Herstellung.

## Beschreibung

Die vorliegende Erfindung bezieht sich auf eine Werkzeugaufnahmevorrichtung und ein Werkzeugaufnahmesystem, eine Standwerkzeugmaschine, welche diese Werkzeugaufnahmevorrichtung aufweist und ein Verfahren zur Herstellung der Werkzeugaufnahmevorrichtung.

Im Stand der Technik sind Werkzeugaufnahmevorrichtungen für ein um eine Rotationsachse rotierbares Werkzeug verschiedener Art bekannt. Insbesondere die Weldon-Werkzeugaufnahmevorrichtung eignet sich zur Aufnahme von Werkzeugen wie eines Fräswerkzeug oder eines Bohrers, insbesondere Kernbohrers bei Verwendung insbesondere als Bestandteil einer elektrischen Bohrmaschine, Standfräsmaschine oder Kernbohrmaschine.

Bei der Weldon-Aufnahme sind am zylindrischen Schaft eines Werkzeuges ein oder zwei Planflächen, im Abstand zum Schaftende angeformt. Ein so ausgebildeter Aufnahmeschaft wird entweder mittels zweier Innensechskantschrauben, die durch die Arbeitsspindel reichen, oder durch Spannbacken innerhalb der Arbeitsspindel befestigt.

Als Weldon-Spannfuttersysteme bzw. Weldon-Werkzeugaufnahmevorrichtungen werden insbesondere Werkzeugvorrichtungen bezeichnet, die zur sicheren Fixierung von Werkzeugen verwendet werden. Charakteristisch für diese Aufnahmen ist eine zylindrische Bohrung, wobei Varianten mit und ohne Kühlmittelkanäle existieren. Weldon-Spannfuttersysteme werden insbesondere für die Aufnahme von Fräswerkzeugen und Bohrwerkzeugen mit einem Zylinderschaft und seitlicher Mitnahmefläche eingesetzt. Die zylindrischen Werkzeugschäfte, die für die Verwendung mit Weldon-Aufnahmen geeignet sind und eine seitliche Mitnahmefläche, insbesondere Planfläche, aufweisen, können insbesondere gemäß der Normen DIN 1835-B und DIN 6535-HB gestaltet sein.

Bei Verwendung in einer Kernlochbohrmaschine wird beispielsweise ein Werkzeug mit Weldon-Aufnahme mittels mindestens einer Spannbacke, die innerhalb der Arbeitsspindel angeordnet sind, befestigt. Dazu wird eine Auslenkhülse beispielsweise axial nach unten bewegt, wobei die federnd gelagerte Spannbacke in einer ersten Anordnung radial nach außen in eine Aufnahme überführt wird und dadurch den zylindrischen Aufnahmeraum der Arbeitsspindel freigibt. Das Werkzeug kann dann bis zu einer Montageposition in die Arbeitsspindel eingeschoben werden. Die federnd gelagerte Auslenkhülse gelangt wieder in ihre Ausgangsposition, die Spannbacke wird in einer zweiten Anordnung radial nach innen geschoben und liegt mit einer Klemmfläche an einer Planfläche des Werkzeugs an. Der Bereich, in dem die Klemmfläche der Spannbacke an der Planfläche der Weldon-Aufnahme des Werkzeugs anliegt, erstreckt sich bei bekannten Weldon-Aufnahmen bis in den Übergangsbereich der planaren Anlagefläche zur zylinderförmigen Außenfläche des Werkzeugschaftes. Dadurch ist das Werkzeug sicher in der Arbeitsspindel arretiert.

Der Außendurchmesser des zylindrischen Schafts des Werkzeugs und der Innendurchmesser der Aufnahmehülse der Arbeitsspindel, insbesondere der Außenradius r1 und der Aufnahmeradius R1, unterscheiden sich nur geringfügig, so dass ein spielfreies Einsetzen ermöglicht wird. Es gilt aber stets, r1 < R1. Die Abweichung liegt in wenigen hundertstel beziehungsweise tausendstel Millimeter insbesondere zwischen 0,09 und 0,001 mm.

Unter extremen Arbeitsbedingungen, insbesondere im Betrieb von Kernlochbohrmaschinen, entsteht im Bereich des Übergangs der planaren Anlagefläche (Planfläche) in den zylindrischen Teil des Werkzeugschaftes eine axial verlaufende Materialanhäufung bzw. ein Materialaufwurf. Die damit verbundene Durchmesservergrößerung des maximalen Durchmessers des Werkzeugschaftes über den Innenradius der Aufnahmehülse hinaus führt dazu, dass das Werkzeug aufgrund der den Innenradius überragenden Materialanhäufung nicht mehr oder nur erschwert von der Arbeitsspindel entfernbar ist. Dieses Entnahmeproblem zu lösen, ist die Aufgabe der vorliegenden Erfindung und wird in der vorliegenden Patentanmeldung beschrieben.

Wie von den Erfindern der vorliegenden Patentanmeldung vorgeschlagen und experimentell bestätigt wurde, kann das Entnahmeproblem durch die Werkzeugaufnahmevorrichtung gemäß Patentanspruch 1 vermieden werden. Bevorzugte Ausgestaltungen der Erfindung ergeben sich aus der Beschreibung und den Figuren und sind auch Gegenstände der abhängigen Patentansprüche.

Dabei ist insbesondere die Klemmfläche der Spannbacke so gestaltet, dass sie in der zweiten Anordnung die Planfläche des Werkzeugschafts nur an Stellen der Planfläche berührt, die von der, insbesondere in Rotationsrichtung gelegenen, Seite der Planfläche beabstandet sind. Diese, insbesondere in Rotationsrichtung gelegene, Planflächenseite der Planfläche markiert bzw. bildet den Übergangsbereich der Planfläche zur zylinderförmigen Außenfläche des Werkzeugschaftes.

Um dies zu erreichen, weist gemäß einer bevorzugten Ausgestaltung die Spannbacke mindestens eine, insbesondere axial in der Klemmfläche verlaufende, Ausnehmung auf, die in der zweiten Anordnung der Spannbacke der Planflächenseite gegenüberliegt. Die Position der Ausnehmung ist insbesondere derart, dass deren radialer Abstand von der Rotationsachse kleiner ist als der radiale Abstand des Außenradius r1 von der Rotationsachse und/oder kleiner ist als der Aufnahmeradius R1 und/oder kleiner ist als der radiale Abstand der Planflächenseite von der Rotationsachse. Dadurch wird der Kontaktbereich zwischen Spannbacke und Planfläche weg von der Planflächenseite entlang der Planfläche nach innen verlagert. In dessen Folge entsteht die Materialanhäufung an einer anderen Stelle des Werkzeugschafts, nämlich entlang der Planfläche nach innen versetzt, weg von der bislang an der hohlzylindrischen Aufnahmefläche der Arbeitsspindel lokalisierten Kante des oben genannten Übergangs der Planfläche. Aufgrund dessen, dass die Stelle der Materialanhäufung von der Aufnahmefläche der Arbeitsspindel beabstandet ist, hat die Materialanhäufung keinen Einfluss auf die Werkzeugentnahme. Bevorzugt dabei ist insbesondere, dass, in der zweiten Anordnung der Spannbacke, die Position der Ausnehmung an der Klemmfläche mit der Position des Übergangs der Planfläche in den zylindrischen Abschnitt des Werkzeugschaftes, also insbesondere der Position der Planflächenseite, übereinstimmt.

Die Werkzeugaufnahmevorrichtung ist insbesondere dazu eingerichtet, dass in der zweiten Anordnung die Planflächenseite von der Klemmfläche beabstandet angeordnet ist. Vorzugsweise ist die Werkzeugaufnahmevorrichtung dazu eingerichtet, dass in der zweiten Anordnung ein sich axial entlang der Planflächenseite erstreckender, insbesondere streifenförmiger Bereich der Planfläche, von der Klemmfläche beabstandet angeordnet ist und diese nicht kontaktiert. Dadurch wird die schädliche Materialanhäufung auf der Planfläche etwa um die Breite des streifenförmigen Bereichs radial nach innen verlagert und die Entnahme des Werkzeugs ermöglicht. In der Praxis erfolgt die Verlagerung der Klemmflächenkontur von der Planflächenseite radial einwärts um eine Strecke "s" derart, dass die Strecke s gerade ausreicht, um die bei Belastung entstehende Materialanhäufung zur Vermeidung des Entnahmeproblems radial einwärts zu verlagern, aber nicht so, dass die Strecke s unnötig groß ist. Denn letztlich dient der Kontakt zwischen Klemmfläche und Planfläche der Übertragung des Drehmoments, so dass die Kontaktfläche/ der Kontaktbereich prinzipiell möglichst groß gehalten werden sollte.

Die Strecke s, um welche die Klemmflächenkontur von der Planflächenseite beabstandet ist, ist vorzugsweise ausgewählt aus einem der folgenden, jeweils bevorzugten Bereiche: 0,1 mm bis 5,0 mm; 0,1 mm bis 4,0 mm; 0,1 mm bis 3,0 mm; 0,1 mm bis 2,0 mm; 0,1 mm bis 1,0 mm; wobei jeweils die untere Grenze auch sein kann: 0,2 mm oder 0,3 mm oder 0,4 mm oder 0,5 mm, oder 0,6 bis 0,9 mm.

Die Planflächenseite ist insbesondere eine gerade Linie. Dies resultiert in einer bevorzugten Ausgestaltung der Werkzeugaufnahmevorrichtung daher, dass die Planfläche eine rechteckförmige, parallel zur Rotationsachse verlaufende Bodenfläche einer Vertiefung eines zylinderförmigen Werkzeugschaftes ist. Die Planflächenseite kann aber insbesondere auch, insbesondere abschnittsweise, von der Linienform abweichen.

Die Planfläche kann ein Rechteck sein, kann aber auch gekrümmte Außenkonturen aufweisen, insbesondere wenn die Planfläche in Bezug auf die Rotationsachse geneigt ist. Dies ist beispielsweise im Rahmen der die Weldon-Aufnahme definierenden Industrienormen optional vorgesehen.

In der zweiten Anordnung wird der Anteil der Klemmfläche, der die Planfläche berührt, als Kontaktfläche bezeichnet. Diese weist eine Klemmflächenkontur auf, die insbesondere eine Außenseite der Klemmfläche ist. Die Klemmflächenkontur ist in der zweiten Anordnung insbesondere um die Strecke s von der Planflächenseite beabstandet. Die Klemmflächenkontur kann eine durchgehende oder unterbrochene gerade oder ungerade Linie sein; maßgeblich ist, dass die in der Praxis resultierende Materialanhäufung die Werkzeugentnahme ermöglicht. Vorzugsweise ist die Klemmflächenkontur eine durchgehende gerade Linie, die einer Seite einer rechteckförmigen Klemmfläche entspricht.

Die Klemmflächenkontur liegt in der zweiten Anordnung insbesondere näher an der Rotationsachse als die den Aufnahmeraum umgebende hohlzylinderförmige Innenfläche der Arbeitsspindel. Der minimale Abstand m der Klemmflächenkontur von der Rotationsachse ist in der zweiten Anordnung kleiner als der Aufnahmeradius R1.

Die Klemmflächenkontur liegt in der zweiten Anordnung insbesondere näher an der Rotationsachse als die zylinderförmige Außenfläche r1 des Werkzeugschaftes. Der minimale Abstand m der Klemmflächenkontur von der Rotationsachse ist in der zweiten Anordnung kleiner als der Außenradius r1 des Werkzeugschaftes.

Die Klemmflächenkontur liegt in der zweiten Anordnung insbesondere näher an der Rotationsachse als die Planflächenseite. Der minimale Abstand m der Klemmflächenkontur von der Rotationsachse ist in der zweiten Anordnung kleiner als der minimale Abstand der Planflächenseite von der Rotationsachse.

Insbesondere durch die in den drei vorangehenden Absätzen genannten Merkmale berührt die Klemmfläche die Planflächenseite in der zweiten Anordnung der Spannbacke nicht. Vorzugsweise berührt die Klemmfläche in der zweiten Anordnung der Spannbacke einen an die Planflächenseite angrenzenden Bereich nicht, insbesondere einen bis zum Abstand s zur Planflächenseite axial verlaufenden streifenförmigen Bereich der Planfläche nicht. Dadurch wird eine Materialanhäufung der Planfläche im Bereich nahe der Planflächenseite vermieden.

In einer bevorzugten Ausgestaltung weist die Spannbacke mindestens eine, insbesondere axial in der planaren Klemmfläche verlaufende, Ausnehmung auf. Insbesondere der Übergang von der planaren Klemmfläche in die Ausnehmung wird durch die Klemmflächenkontur gebildet bzw. markiert.

Die Ausnehmung kann insbesondere eine Vertiefung der Klemmfläche sein, die insbesondere durch Fräsen in die Klemmfläche eingebracht sein kann. Die Vertiefung weist insbesondere eine in der Klemmfläche gelegene Öffnung auf. Die Öffnung hat einen, insbesondere axial verlaufenden und insbesondere streifenförmigen, Öffnungsquerschnitt, der in der Ebene der Klemmfläche liegt. Vorzugsweise ist eine Position der Ausnehmung in der Klemmfläche, insbesondere eine Position im Öffnungsquerschnitt der Ausnehmung, in der zweiten Anordnung derart, dass:
- ein radialer Abstand der Position von der Rotationsachse dem Innenradius R1 der Aufnahme entspricht, und/oder
- ein radialer Abstand der Position von der Rotationsachse dem Außenradius r1 des Werkzeugschaftes entspricht, und/oder
- ein radialer Abstand der Position von der Rotationsachse größer ist als der radiale Abstand m der Klemmflächenkontur von der Rotationsachse.

Da die Klemmfläche im Bereich des Öffnungsquerschnitts der Ausnehmung die Planfläche des Werkzeugschaftes in der zweiten Anordnung nicht berührt, kommt es in diesem ausgesparten Bereich an der Planfläche auch nicht zur unerwünschten Materialanhäufung.

Die Klemmflächenkontur bildet insbesondere eine axial verlaufende Außenseite der Klemmfläche. Dies gilt für den Fall, dass die Klemmfläche eine axial verlaufende Ausnehmung aufweist. Es gilt aber auch dann, wenn die Klemmfläche keine Ausnehmung aufweist und insbesondere kleiner ist als die Planfläche.

Vorzugsweise weist die Klemmfläche eine Kontaktfläche auf, und die Werkzeugaufnahmevorrichtung ist vorzugsweise dazu eingerichtet, dass die Kontaktfläche in der zweiten Anordnung die Planfläche, insbesondere deren Kontaktbereich, kontaktiert. Dabei werden insbesondere nur solche Flächenbereiche der Klemmfläche als Kontaktfläche bezeichnet, die in der zweiten Anordnung die Planfläche berühren, wobei insbesondere die Kontaktfläche kleiner ist als die Planfläche.

Analog werden insbesondere nur solche Flächenbereiche der Planfläche als Kontaktbereich bezeichnet, die in der zweiten Anordnung von der Klemmfläche, insbesondere deren Kontaktfläche, berührt werden.

Vorzugsweise ist die Planfläche rechteckförmig. Insbesondere weist die Planfläche eine der ersten Planflächenseite gegenüberliegende zweite Planflächenseite auf, die insbesondere beide axial und somit parallel verlaufen. Der Abstand der ersten Planflächenseite zu der zweiten Planflächenseite entspricht der Breite B der Planfläche.

Vorzugsweise ist die Werkzeugaufnahmevorrichtung dazu eingerichtet, dass in der zweiten Anordnung die erste Planflächenseite die Klemmfläche nicht berührt und insbesondere die zweite Planflächenseite die Klemmfläche berührt. Es ist aber auch möglich und bevorzugt, dass in der zweiten Anordnung die zweite Planflächenseite die Klemmfläche nicht berührt. In letzterem Fall liegt der Kontaktbereich vollständig beabstandet von den axial verlaufenden Planflächenseiten.

Der Kontaktbereich ist insbesondere kleiner als die Planfläche.

In einer bevorzugten Ausgestaltung der Werkzeugaufnahmevorrichtung weist die Klemmfläche mehr als eine Ausnehmung auf.

In einer weiteren bevorzugten Ausgestaltung der Werkzeugaufnahmevorrichtung weist die Klemmfläche keine Ausnehmung auf. Insbesondere in diesem Fall ragt die Planfläche in der zweiten Anordnung vorzugsweise, mindestens an einer axialen Seite der Klemmfläche, über die Klemmfläche hinaus und die Klemmflächenkontur liegt insbesondere beabstandet von der Planflächenseite an der Planfläche an.

Die Erfindung betrifft auch eine Standwerkzeugmaschine, insbesondere eine Bohrmaschine, eine Fräsmaschine oder eine Kernbohrmaschine, die eine erfindungsgemäße Werkzeugaufnahmevorrichtung aufweist.

Die Erfindung betrifft auch ein Werkzeugaufnahmesystem für ein um eine Rotationsachse rotierbares Werkzeug, wobei das Werkzeugaufnahmesystem eine, insbesondere erfindungsgemäße, Werkzeugaufnahmevorrichtung und das Werkzeug mit dem Werkzeugschaft aufweist,
wobei die Werkzeugaufnahmevorrichtung eine Arbeitsspindel aufweist, die sich entlang der Rotationsachse (A) erstreckt und die einen axial ausgerichteten, zylinderförmigen, einen Aufnahmeradius (R1) aufweisenden Aufnahmeraum aufweist, in den der zumindest abschnittsweise zylinderförmiger, einen Außenradius (r1) aufweisende Werkzeugschaft durch axiales Bewegen des Werkzeugschaftes bis in eine Montageposition des Werkzeugschaftes einsetzbar ist, wobei der Werkzeugschaft mindestens eine vom Außenradius (r1) radial nach innen verlagerte Planfläche aufweist, die eine axial verlaufende, einen Übergang der Planfläche zur Zylinderfläche des Werkzeugschafts bildende Planflächenseite aufweist,
wobei die Werkzeugaufnahmevorrichtung mindestens eine radial beweglich angeordnete Spannbacke mit einer planaren Klemmfläche aufweist,
wobei die Werkzeugaufnahmevorrichtung dazu eingerichtet ist, dass in einer ersten Anordnung der Spannbacke der minimale Abstand (a1) der Klemmfläche von der Rotationsachse (A) größer oder gleich dem Außenradius (r1) des Werkzeugschaftes ist, und
in einer zweiten Anordnung der Spannbacke der minimale Abstand (a2) der Klemmfläche von der Rotationsachse (A) kleiner dem Außenradius (r1) des Werkzeugschaftes ist und die Klemmfläche in der Montageposition einen Kontaktbereich der Planfläche kontaktiert und der Kontaktbereich von der Planflächenseite beabstandet ist.

Die Erfindung betrifft auch ein Verfahren zur Herstellung der erfindungsgemäßen Werkzeugaufnahmevorrichtung, aufweisend den Schritt, dass die Form der Klemmfläche der mindestens einen Spannbacke so gebildet wird, dass die Klemmfläche in der Montageposition einen Kontaktbereich der Planfläche kontaktiert und der Kontaktbereich von deren Planflächenseite beabstandet ist, insbesondere dass die mindestens eine Spannbacke so geformt wird, dass die Klemmflächenkontur in der zweiten Anordnung die Planfläche kontaktiert und von deren Planflächenseite beabstandet ist. Diese Formgebung kann insbesondere so erfolgen, dass in der planaren Klemmfläche die axial verlaufende Ausnehmung vorgesehen wird, was insbesondere durch ein Material abtragendes Verfahren beispielsweise Fräsen erfolgen kann.

Die Werkzeugaufnahmevorrichtung weist vorzugsweise einen Kopplungsabschnitt auf, der insbesondere mit der Arbeitsspindel verbunden ist und über welchen die Arbeitsspindel mit der Antriebswelle einer Antriebseinrichtung, insbesondere eines Elektromotors, einer Standwerkzeugmaschine koppelbar ist. Der Kopplungsabschnitt kann insbesondere ein Getriebeelement, insbesondere Getrieberad, eines Getriebes sein, mittels welchem die Arbeitsspindel angetrieben wird.

Die Werkzeugaufnahmevorrichtung weist vorzugsweise eine axial verschiebbare Spannhülse auf, die insbesondere um die Arbeitsspindel herum angeordnet ist. Die Spannhülse ist axial beweglich an der Arbeitsspindel gelagert und ist insbesondere gegen die axiale Auslenkung federgelagert.

Die mindestens eine Spannbacke ist insbesondere radial beweglich an der Arbeitsspindel gelagert, so dass die Spannbacke von mindestens einem kraft- bzw. formbildenden Teil, beispielsweise einer Feder radial nach außen gedrückt wird, insbesondere um von der zweiten Anordnung in die erste Anordnung zu gelangen.

Die Spannhülse ist vorzugsweise so geformt, dass die mindestens eine Spannbacke in eine radial ausgelenkte Position gelangen kann, wenn die Spannbacke aus der zweiten Anordnung in die erste Anordnung bewegt wird. Die Spannhülse ist vorzugsweise so geformt, dass die mindestens eine Spannbacke von einer Innenfläche der Spannhülse zwangsgeführt radial einwärts geschoben wird, wenn die Spannbacke aus der ersten Anordnung in die zweite Anordnung bewegt wird. Die Spannhülse weist insbesondere mindestens eine radial verlaufende Aussparung in der den Werkzeugschaft umgebenden Innenfläche der Spannhülse auf, in die eine Spannbacke in deren erster Anordnung eingreift bzw. in welche die Spannbacke einfährt, wenn die Spannhülse axial ausgelenkt wird und die Spannbacke von der zweiten Anordnung in die erste Anordnung überführt wird.

Die Werkzeugaufnahmevorrichtung weist vorzugsweise eine axial wirkende Federlagerung auf, bestehend aus einem Federelement und einem axial verschiebbar angeordnetem Zentrierstift. Dadurch kann, nach erfolgreichem Herstellen einer Bohrung, der Kern der Bohrung, welcher sich innerhalb eines Hohlraums des Werkzeugs befindet, aus dem Werkzeug herausgedrückt werden.

Weitere Vorteile, Merkmale und Anwendungsmöglichkeiten der vorliegenden Erfindung ergeben sich aus der nachfolgenden Beschreibung in Zusammenhang mit den Figuren:
Fig. 1a zeigt eine Seitenansicht einer beispielhaften erfindungsgemäßen Standwerkzeugmaschine, die eine Werkzeugaufnahmevorrichtung gemäß einem Ausführungsbeispiel der Erfindung aufweist.
Fig. 1b zeigt eine Seitenansicht einer Arbeitseinheit einer beispielhaften erfindungsgemäßen Standwerkzeugmaschine, die eine Werkzeugaufnahmevorrichtung gemäß einem Ausführungsbeispiel der Erfindung aufweist.

Fig. 1c zeigt eine Seitenansicht der Arbeitseinheit aus Fig. 1b, ohne Gehäuseteile.
Fig. 2 zeigt eine Seitenansicht eines Werkzeugaufnahmesystems gemäß einem Ausführungsbeispiel der Erfindung, das eine Werkzeugaufnahmevorrichtung gemäß einem Ausführungsbeispiel der Erfindung und ein Werkzeug aufweist.
Fig. 3 zeigt einen Querschnitt der Werkzeugaufnahmevorrichtung der Fig. 1b, in der Ebene x-z.
Fig. 4a zeigt schematisch einen Querschnitt der Werkzeugaufnahmevorrichtung der Fig. 1b, entlang der x-y-Ebene in Höhe der Spannbacke in deren erster Anordnung, mit eingesetztem Werkzeugschaft.
Fig. 4b zeigt schematisch einen Querschnitt der Werkzeugaufnahmevorrichtung der Fig. 1b, entlang der x-y-Ebene in Höhe der Spannbacke in deren zweiter Anordnung, mit dem Werkzeugschaft in Montageposition.
Fig. 4c zeigt ein Detail der Fig. 4b.
Fig. 4d und 4e zeigen eine perspektivische Ansicht der Spannbacke der Werkzeugaufnahmevorrichtung der Fig. 1b,
Fig. 4f zeigt einen Querschnitt durch die Werkzeugaufnahmevorrichtung der Fig. 1b, entlang der x-y-Ebene in Höhe der Spannbacke.
Fig. 5a zeigt schematisch einen Querschnitt einer nicht erfindungsgemäßen Werkzeugaufnahmevorrichtung, entlang der x-y-Ebene in Höhe der Spannbacke in deren zweiter Anordnung, mit dem Werkzeugschaft in Montageposition.
Fig. 5b zeigt schematisch einen Querschnitt der Werkzeugaufnahmevorrichtung der Fig. 1b, entlang der x-y-Ebene in Höhe der Spannbacke in deren zweiter Anordnung, mit dem Werkzeugschaft in Montageposition.
Fig. 5c zeigt schematisch einen Querschnitt einer Werkzeugaufnahmevorrichtung gemäß einem weiteren Ausführungsbeispiel der Erfindung, entlang der x-y-Ebene in Höhe der Spannbacke in deren zweiter Anordnung, mit dem Werkzeugschaft in Montageposition.
Fig. 6a zeigt die Planfläche des Werkzeugschaftes aus Fig. 5a.
Fig. 6b zeigt die Planfläche des Werkzeugschaftes aus Fig. 5b.
Fig. 6c zeigt die Planfläche des Werkzeugschaftes aus Fig. 5c.
Fig. 7 zeigt drei Ansichten eines Querschnitts der Werkzeugaufnahmevorrichtung der Fig. 1b, in der Ebene x-z, mit jeweils verschiedenen Positionen der Spannhülse und der Spannbacke.

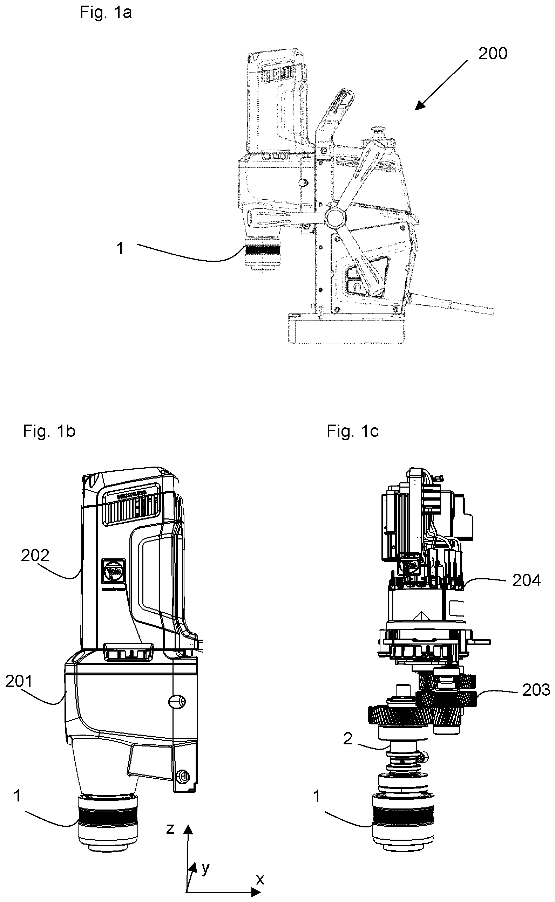

Fig. 1a zeigt eine Standwerkzeugmaschine 200, hier eine Kernbohrmaschine, die eine Werkzeugaufnahmevorrichtung 1 aufweist.

Fig. 1b zeigt eine Arbeitseinheit der Kernbohrmaschine 200, die eine Werkzeugaufnahmevorrichtung 1 aufweist. Die Arbeitseinheit weist ein Motorgehäuse 202 und ein Getriebegehäuse 201 auf.

Fig. 1c zeigt den im Motorgehäuse 202 angeordneten Elektromotor 204 als Antriebseinheit, das im Getriebegehäuse 201 angeordnete Getriebe 203 und die über das Getriebe angetriebene Arbeitsspindel 2 der Werkzeugaufnahmevorrichtung 1.

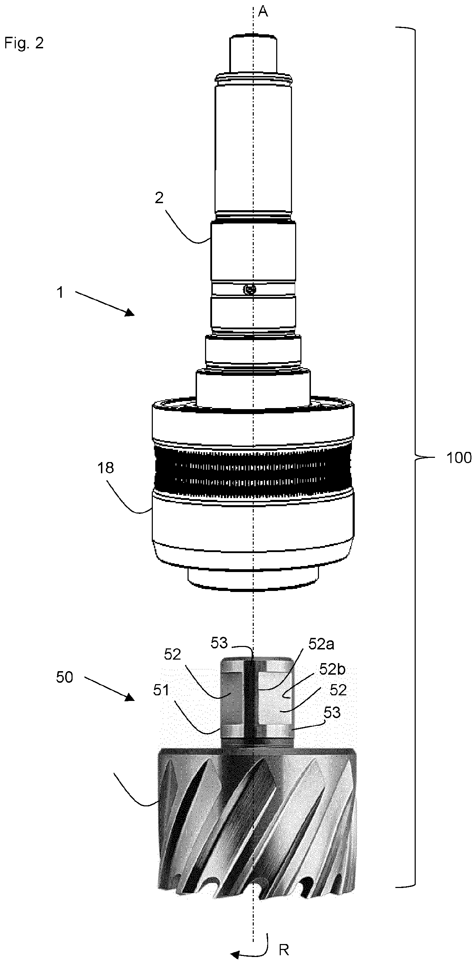

Fig. 2 zeigt das Werkzeugaufnahmesystem 100, das die Werkzeugaufnahmevorrichtung 1 und ein Werkzeug 50 aufweist, welches ein Kernfräser mit einem Werkzeugschaft 51 und eine Weldon-Aufnahme ist.

Wie in Fig. 2 gezeigt ist, dient die Werkzeugaufnahmevorrichtung 1 der Aufnahme eines in Rotationsrichtung R um eine Rotationsachse A rotierbaren Werkzeuges 50, welches hier eine Weldon-Werkzeugaufnahme aufweist. Durch die Rotation wird unter Belastung ein Drehmoment von der Arbeitsspindel auf den Werkzeugschaft übertragen.

Der Werkzeugschaft 51 des Werkzeugs 50 ist passend für die Werkzeugaufnahmevorrichtung 1 ausgebildet, und weist zwei Planflächen 52 auf, die jeweils von einer axial verlaufenden ersten Planflächenseite 52a und einer axial verlaufenden zweiten Planflächenseite 52b der Planfläche begrenzt werden, die jeweils den Übergang der Außenseite des Werkzeugschaftes 51 zum zylinderförmigen Abschnitt 53 des Werkzeugschaftes 51 markieren bzw. bilden.

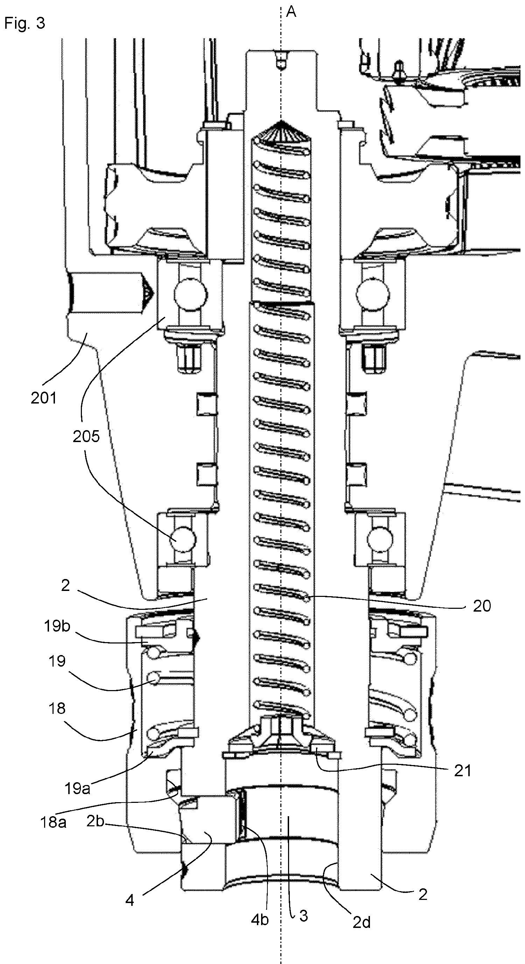

Fig. 3 zeigt einen Querschnitt der Werkzeugaufnahmevorrichtung 1 aus Fig. 1b, in der Ebene x-z. Die Arbeitsspindel 2 ist über zwei Kugellager 205 rotierbar um die Achse A am Getriebegehäuse 201 gelagert. Am unteren Ende der Arbeitsspindel ist ein hohlzylinderförmige Aufnahmeraum 3 der Arbeitsspindel gezeigt, in den von unten der im Wesentlichen zylinderförmige Werkzeugschaft 51 eines Werkzeugs 50 einschiebbar ist, wenn sich die Spannbacke 4 in ihrer ersten Anordnung befindet. (In Figur 3 ist die Position der Spannbacke 4 in Ihrer zweiten Anordnung gezeigt, in der die Spannbacke in den Aufnahmeraum 3 eingreift, so dass das Einsetzen des Werkzeugs nicht möglich ist.). Ein eingeschobener Werkzeugschaft 51 liegt mit seiner Außenfläche 53 nahezu spielfrei an der zylinderförmigen Innenfläche 2d der Arbeitsspindel an, welche den Aufnahmeraum 3 umgibt (nicht gezeigt).

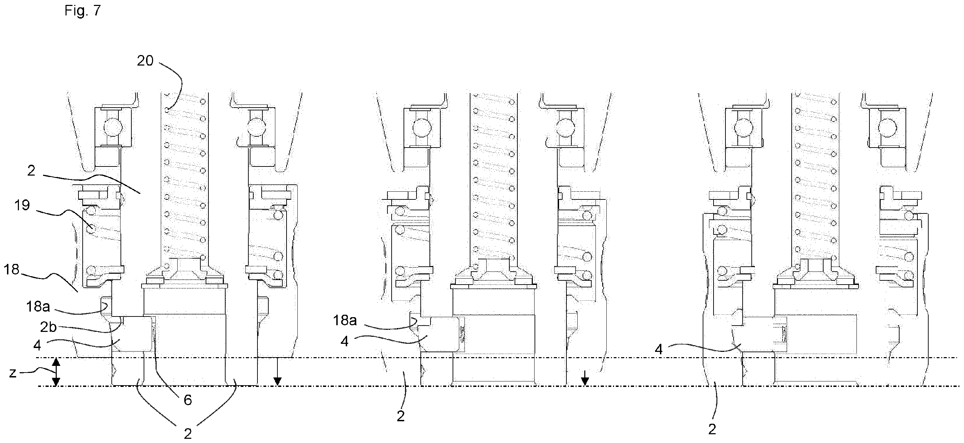

Die Spannbacke 4 ist radial verschiebbar und im Wesentlichen spielfrei in der Ausnehmung 2b der Arbeitsspindel 2 gelagert. Die Spannbacke 4 wird durch radial wirkende Federn (in Fig. 3 nicht gezeigt) kontinuierlich in die Aufnahmetasche 18a gedrückt, wenn die Spannhülse 18 nach unten verschoben wird. Dies wird anhand der Figur 7 noch erläutert.

Das Einsetzen des Werkzeugs 50 wird durch manuelles Verschieben der Spannhülse 18 nach unten ermöglicht. Die Werkzeughülse 18 ist axial entlang der z-Richtung verschiebbar an der Arbeitsspindel 2 gelagert. Beim Bewegen der Spannhülse 18 axial nach unten wird die außen an der Arbeitsspindel 2 angeordnete Spiralfeder 19 axial komprimiert. Die Spiralfeder 19 ist nach unten an der Ringscheibe 19a gelagert, die an der Arbeitsspindel 2 fixiert ist. Nach oben ist die Spiralfeder 19 am Ringelement 19b gelagert, das in der Spannhülse fixiert ist. Das Ringelement 19b weist eine radial innen angeordnete Gleitfläche auf, mittels der die Spannhülse radial an der Arbeitsspindel 2 abgestützt ist und an dieser axial verschiebbar ist.

Die Werkzeugaufnahmevorrichtung weist vorzugsweise eine axial wirkende Federlagerung auf, bestehend aus einem Federelement und einem axial verschiebbar angeordnetem Zentrierstift. Dadurch kann, nach erfolgreichem Herstellen einer Bohrung, der Kern der Bohrung, welcher sich innerhalb des Werkzeugs befindet, aus dem Werkzeug herausgedrückt werden.

Oberhalb des Aufnahmeraums 3 der Arbeitsspindel 2 erstreckt sich ein zylinderförmiger Hohlraum der Arbeitsspindel 2, in dem eine Federlagerung, eine komprimierbare Spiralfeder 20 und ein Zentrierstift (nicht gezeigt) angeordnet ist. Nach erfolgreichem Herstellen einer Kernbohrung, kann der Kern der Bohrung, der sich möglicherweise innerhalb eines Hohlraums des Werkzeugs befindet, durch aktivieren des Zentrierstiftes ausgestoßen werden.

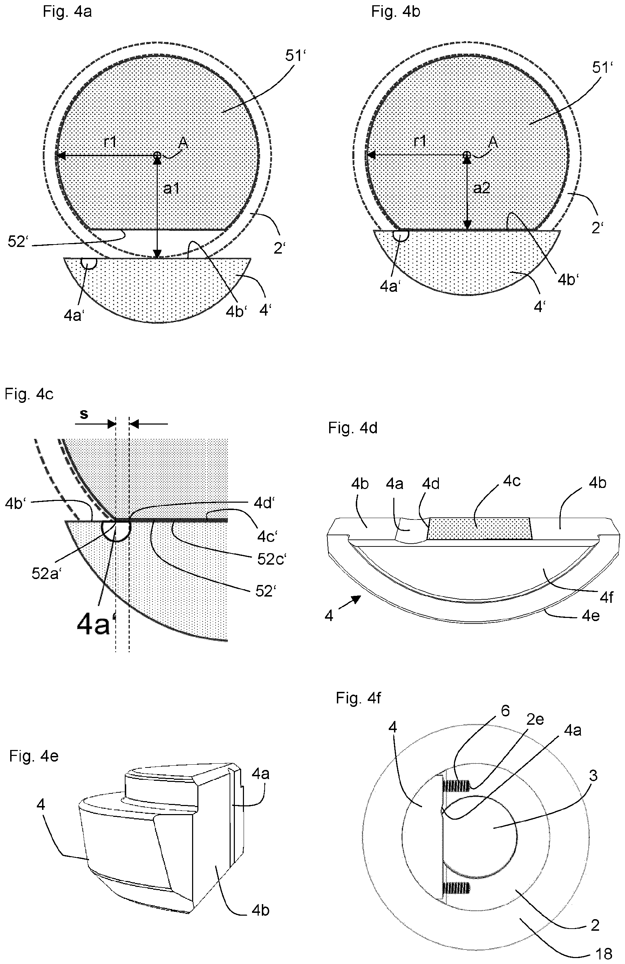

Wie in Fig. 4a am besten zu sehen ist, ist die Klemmfläche 4b` in der in Fig. 4a gezeigten ersten Anordnung der Spannbacke 4' in einem Abstand a1 von der Rotationsachse A angeordnet, wobei der Abstand a1 größer oder gleich dem Außenradius r1 des Werkzeugschaftes 51' ist. Dadurch ist der Aufnahmeraum 3 freigegeben und das Werkzeug 50 kann durch axiales Bewegen in den Aufnahmeraum 3 der Arbeitsspindel 2' eingesetzt werden. In Figur 4a ist die eingesetzte Position der Werkzeugschaftes 51' gezeigt, in der die Klemmfläche 4b' der Spannbacke 4' der Planfläche 52' des Werkzeugschaftes 51' in radialer Richtung gegenüberliegt.

In Fig. 4b ist das Werkzeug 50 in der Aufnahme montiert, der Werkzeugschaft 51' befindet sich in Montageposition. Die Spannbacke 4' befindet sich in der zweiten Anordnung, in der die Klemmfläche 4b' die Planfläche 52` des Werkzeugschafts 51' kontaktiert. Dadurch kann das Drehmoment des Motors mittels der Spannbacke 4' auf den Werkzeugschaft 51 ` übertragen werden. Die Klemmfläche 4b' befindet sich in einem radial gemessenen Abstand a2 von der Rotationsachse A, wobei der Abstand a2 kleiner dem Außenradius r1 des Werkzeugschaftes 51' und kleiner dem Abstand a1 ist.

Wie in Fig. 4c zu sehen ist, weist die Klemmfläche 4b' eine Ausnehmung 4a' auf. In der zweiten Anordnung liegt die Ausnehmung 4a', hier eine axial verlaufende Rille, so der Planfläche 52` gegenüber, dass die Planflächenseite 52a' die Klemmfläche 4b' nicht kontaktiert. Die Klemmfläche 4b' wird nur in ihrem Kontaktbereich 4c' von der Planfläche 52' kontaktiert. Entsprechend ist der Kontaktbereich 52c' der Planfläche 52', der von der Klemmfläche 4b` kontaktiert wird, um einen Abstand s von der Planflächenseite 52a' der Planfläche 52' beabstandet. Die Kontaktfläche 4c` weist eine Außenseite auf, die durch eine gerade, axial verlaufende Klemmflächenkontur 4d' gebildet wird. Die Klemmflächenkontur 4d', und mit ihr die Kontaktfläche 4c', sind von der Planflächenseite 52a' um den Abstand s beabstandet. Nur solche Flächenbereiche der Klemmfläche 4b` werden als Kontaktfläche 4c' bezeichnet, die in der zweiten Anordnung die Planfläche 52' berühren. Insbesondere ist die Kontaktfläche 4c' kleiner als die Planfläche 52'. Die Kontaktfläche 4c' und der Kontaktbereich 52c` weisen dieselbe Größe auf.

Der Abstand s, gemessen senkrecht zur Achse A und entlang der Planfläche 52', beträgt hier ca. 3 mm. Durch die Beabstandung des Kontaktbereichs 52c` von der Planflächenseite 52a' der Planfläche erfolgt im Bereich zwischen der Planflächenseite 52a' bis zur Klemmflächenkontur 4d' keine Belastung der Planfläche, wenn ein Drehmoment von der Arbeitsspindel 2' mittels der Spannbacke 4' auf den Werkzeugschaft 51' übertragen wird.

Die Breite der Ausnehmung 4a', gemessen in Richtung senkrecht zur Achse A in der Ebene der Klemmfläche 4b', beträgt hier 3,0 mm. Die maximale Tiefe der Ausnehmung 4a', gemessen in Richtung senkrecht zur Klemmfläche beträgt 0,5 mm. Die gesamte Breite der Klemmfläche 4b` bzw. der Spannbacke 4', gemessen senkrecht zur Achse A und entlang der Planfläche 52', beträgt hier 30 mm.

Fig. 4d zeigt die Spannbacke 4 der Werkzeugaufnahme 1. Es handelt sich um ein Teil, das im Wesentlichen die Form eines Kreisscheibensegments aufweist. Eine kreisförmige Außenkontur 4e der Spannbacke 4 ist so geformt, dass sie in die hohlzylindrische Aufnahmetasche 18a einsetzbar ist, die in der Spannhülse 18 vorgesehen ist. Die senkrecht zur Oberseite 4f der Spannbacke 4 verlaufende Klemmfläche 4b zeigt die axial verlaufende Rille 4a, die Kontaktfläche 4c, welche in der zweiten Anordnung der Spannbacke 4 den Kontaktbereich der Planfläche 52 kontaktiert, und die Klemmflächenkontur 4d, welche die Außenseite der Kontaktfläche 4c und zudem den Übergang, zur Rille 4a bildet.

Fig. 4e zeigt eine perspektivische Seitenansicht der Spannbacke 4. Ein strukturelles Merkmal der Spannbacke 4 ist die Abschrägung der von der Klemmfläche 4b verschiedenen Außenseite(n) der Spannbacke, welche die Ober- und Unterseite der Spannbacke verbinden. Diese Außenseiten sind gegenüber der Klemmfläche 4b und gegenüber der Horizontalen geneigt. Dies erleichtert das Einführen der Spannbacke 4 in die auf der Innenseite der Spannhülse 18 vorgesehene Aufnahmetasche 18a (Fig. 7) für die Spannbacke 4.

Fig. 4f zeigt einen Querschnitt durch die Werkzeugaufnahmevorrichtung 1 in Fig. 1b, entlang der x-y-Ebene in Höhe der Spannbacke 4 in deren zweiter Anordnung. Gezeigt sind hier Spiralfedern 6, die in Aufnahmebohrungen 2e der Arbeitsspindel 2 in Höhe der Ausnehmung 2b gelagert sind. Die Spiralfedern 6 drücken die Spannbacke 4 radial nach außen in die Aufnahmetasche 18a der Spannhülse 18, wenn diese axial nach unten verschoben wird (Fig. 7).

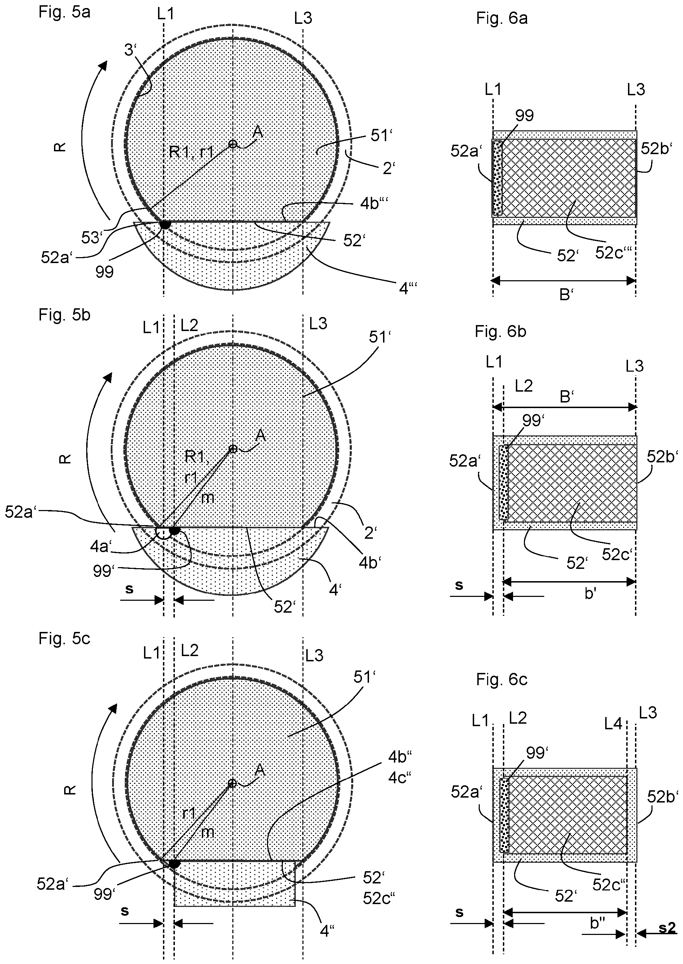

Fig. 5a zeigt schematisch einen Querschnitt einer nicht erfindungsgemäßen Werkzeugaufnahmevorrichtung, entlang der x-y-Ebene in Höhe der Spannbacke 4‴ in deren zweiter Anordnung, mit dem Werkzeugschaft 51' in Montageposition. Der schwarze Punkt 99 symbolisiert das Auftreten einer Materialanhäufung 99 auf der Planfläche 52' des Werkzeugschaftes 51', und zwar im Bereich des Übergangs der Planfläche 52` in den zylinderförmigen Bereich des Werkzeugschaftes 51', also an der Planflächenseite 52a`.

Die Figur 6a zeigt die axial verlaufende Materialanhäufung 99 auf der Planfläche 52'. Die Materialanhäufung 99 entsteht durch eine intensive Belastung der Planflächenseite 52a' bei Übertragung des Drehmoments, wobei nur der Bereich des Übergangs von der Planfläche 52` in den zylinderförmigen Abschnitt 53', die Planflächenseite 52a' belastet wird, und weniger die der Planflächenseite 52a' gegenüberliegende Planflächenseite 52b` der Planfläche. Die Planflächenseite 52a' ist die bei Rotation um die Achse A in Rotationsrichtung liegende Außenseite der Planfläche 52`, während die Planflächenseite 52b` die entgegen der Rotationsrichtung liegende Außenseite der Planfläche 52' ist. Die Planfläche 52` erstreckt sich, ebenso wie der hier von der Klemmfläche 4b‴ kontaktierte Kontaktbereich 52c‴, über die Breite B', gemessen senkrecht zur Achse A zwischen den Linien L1 und L3.

Wie in der Figur 5a schematisch gezeigt ist, vergrößert sich durch die Materialanhäufung 99 in der zweiten Anordnung der Spannbacke der maximale Außendurchmesser des Werkzeugschaftes 51` über den Innendurchmesser (zweifacher Außenradius R1) des Aufnahmeraums 3` der Arbeitsspindel 2' hinaus. Dadurch blockiert die in die Ausnehmung 2b (gezeigt in Fig. 3) der Arbeitsspindel hineinragende Materialanhäufung 99 die Entnahme des Werkzeugschaftes 51' aus der Montageposition, denn der Werkzeugschaft 51' ist in radialen Richtungen spielfrei im Aufnahmeraum 3' angeordnet.

Die Darstellung in Fig. 5b entspricht im Wesentlichen der Darstellung in Fig. 4b. Wie in Fig. 5b gezeigt ist, ist bei einer erfindungsgemäßen Werkzeugaufnahmevorrichtung 1 eine axiale Rille 4a' in der Klemmfläche 4b` vorgesehen, die in der zweiten Anordnung der Spannbacke 4' der Planflächenseite 52a' gegenüberliegt. Der resultierende Kontaktbereich 52c' der Planfläche 52', in dem diese von der Klemmfläche 4b` kontaktiert wird, ist somit um den Abstand s von der Planflächenseite 52a' beabstandet. Der Abstand s ist gemessen entlang der Planfläche 52` senkrecht zur Achse A, hier zwischen den Linien L1 und L2.

Wie in Fig. 6b gezeigt ist, wird eine axial verlaufende Materialanhäufung 99` auf der Planfläche 52` bei Belastung ebenfalls erzeugt. Die Materialanhäufung 99' ist aber entlang der Breite B' der Planfläche 52` um die Distanz s nach innen, näher zur Achse A verschoben und von der Planflächenseite 52a' entfernt. Die an dieser Stelle entstehende, verlagerte Materialanhäufung 99` behindert die Werkzeugentnahme nicht. Wie Fig. 6b zeigt, ist die Planfläche 52' rechteckförmig ausgebildet und wird auf der einen Seite durch die erste Planflächenseite 52a' und auf der anderen Seite durch die zweite Planflächenseite 52b` begrenzt und weist eine Breite B' auf. Der Kontaktbereich 52c'der innerhalb der Planfläche 52' liegt weist eine um den Abstand s' reduzierte Breite b' gegenüber der Breite B' der Planfläche 52` auf.

Die Figur 5b zeigt, dass die Materialanhäufung 99' den maximalen Außendurchmesser des Werkzeugschaftes 51' nicht vergrößert. Der Abstand m der Materialanhäufung von der Achse A zuzüglich der Ausdehnung der Materialanhäufung 99' in radialer Richtung ist stets kleiner als der Aufnahmedurchmesser R1, der im Wesentlichen dem Außendurchmesser r1 der zylindrischen Außenfläche des Werkzeugschaftes entspricht.

Fig. 5c zeigt, analog zur Figur 5b, schematisch einen Querschnitt einer Werkzeugaufnahmevorrichtung 1 gemäß einem weiteren Ausführungsbeispiel der Erfindung, in der zweiten Anordnung der Spannbacke 4", bei der die Spannbacke 4" eine andere Form als die Spannbacke 4' und die Spannbacke 4 aufweist. Die Spannbacke 4" ist hier quaderförmig gezeigt. Wesentlich ist aber, dass die Kontaktfläche 4c" der Spannbacke hier im wesentlichen rechteckförmig ist. Anstelle einer Ausnehmung oder Rille ist die Klemmfläche 4b" hier so dimensioniert und in der zweiten Anordnung so angeordnet, dass die resultierende Kontaktfläche 4c" der Spannbacke und der resultierende Kontaktbereich 52c" der Planfläche von der Planflächenseite 52a' um die Distanz s' beabstandet ist ähnlich des Kontaktbereichs 52c' der Figur 5b. Die die Klemmfläche 4b" begrenzende Klemmflächenkontur, welche die Planfläche 52` belastet, ist ebenfalls um die Distanz s' von der Planflächenseite 52a' entfernt. Daraus resultiert auch die zum Ausführungsbeispiel der Fig. 5b identische Wirkung, dass die Materialanhäufung 99' den maximalen Außendurchmesser des Werkzeugschaftes 51' nicht vergrößert. Der Abstand m der Materialanhäufung von der Achse A zuzüglich der Ausdehnung der Materialanhäufung 99' in radialer Richtung ist auch hier stets kleiner als der Aufnahmedurchmesser R1, der im Wesentlichen dem Außendurchmesser r1 der zylindrischen Außenfläche des Werkzeugschaftes entspricht.

Fig. 6c zeigt ebenfalls, dass der resultierende Kontaktbereich 52c" von der Planflächenseite 52a' um eine Distanz s' beabstandet ist ähnlich dem Kontaktbereich 52c' der Figur 6b und dass deshalb die Materialanhäufung 99" in Richtung von der Planflächenseite 52a' weg verschoben ist. Die Breite b" der Kontaktfläche 4c" bzw. des Kontaktbereichs 52c" ist hier kleiner als die Breite b' in Figur 6b. Die Klemmfläche 4b" berührt hier weder die erste Planflächenseite 52a' noch die zweite Planflächenseite 52b'. Die Klemmfläche 4b" ist von der Planflächenseite 52a' um den Abstand s und von der Planflächenseite 52b` um den Abstand s2 (Abstand zwischen den Linien L3 und L4) beabstandet angeordnet.

Fig. 7 zeigt die drei Ansichten eines Querschnitts der Werkzeugaufnahmevorrichtung 1 aus Fig. 1b, in der Ebene x-z, mit jeweils verschiedenen Positionen der Spannhülse 18 und der Spannbacke 4, wenn die Spannhülse 18 unter Komprimierung der Spiralfeder 19 von oben nach unten geschoben wird, so dass die Spannbacke 4 mittels der Spiralfedern 6 von der zweiten Anordnung in die erste Anordnung geschoben wird, in welcher der Benutzer den Werkzeugschaft 51 in den Aufnahmeraum 3 der Arbeitsspindel nahezu spielfrei einsetzen kann. Lässt der Benutzer die Spannhülse 18 wieder los, so wird diese durch die Rückstellfeder 19 in die Ausgangsposition zurückgeschoben. Bei dieser Rückstellbewegung der Spannhülse schiebt die entsprechend an die Außenseitenform der Spannbacke 4 angepasste Innenfläche der Spannhülse 18 die Spannbacke 4 in die zweite Anordnung zurück, so dass sich der eingesetzte Werkzeugschaft 51 (nicht in Fig. 7 gezeigt) in der Montageposition befindet.

### Bezuaszeichenliste

| | |
|---|---|
| 1 | Werkzeugaufnahmevorrichtung |
| 2 | Arbeitsspindel |
| 2b | Ausnehmung |
| 2d | zylinderförmige Innenfläche von 3 |
| 2e | Aufnahmebohrung |
| 3, 3' | Aufnahmeraum |
| 4, 4', 4" 4‴ | Spannbacke |
| 4a, 4a' | Ausnehmung in 4b |
| 4b, 4b', 4b" | Klemmfläche |
| 4c, 4c' | Kontaktfläche |
| 4d, 4d' | Klemmflächenkontur |
| 4e | Kreisförmige Außenkontur |
| 4f | Oberseite von 4 |
| 6 | Spiralfeder |
| 18 | Spannhülse |
| 18a | Aufnahmetasche |
| 19 | Spiralfeder |
| 19a | Ringscheibe |
| 19b | Ringelement |
| 20 | Spiralfeder |
| 21 | Ringscheibe |
| 50 | Werkzeug |
| 51, 51' | Werkzeugschaft |
| 52, 52' | Planfläche von 51 |
| 52a, 52a' | ersten Planflächenseite |
| 52b | zweiten Planflächenseite |
| 52c | Kontaktbereich |
| 53 | zylinderförmigen Abschnitt von 51 |
| 99, 99', 99" | Materialanhäufung |
| 100 | Werkzeugaufnahmesystem |
| 200 | Kernbohrmaschine |
| 201 | Getriebegehäuse |
| 202 | Motorgehäuse |
| 203 | Getriebe |
| 204 | Elektromotor |
| 205 | Kugellager |
| F | Rotationsachse |
| R | Rotationsrichtung |
| R1, r1 | Aufnahmeradius |
| a1 | Anstand |
| A | Achse |
| a2 | Abstand |
| b, b1', b" | Breite von 4b, 4b', 4b" |
| B' | Breite von 52 |
| Z | Richtung der Spannhülse |
| s, s' | Abstand |
| L1, L2, L3, L4 | Linien |
| m | Abstand |

## Patentansprüche

1. Werkzeugaufnahmevorrichtung (1) für ein um eine Rotationsachse (A) rotierbares Werkzeug (50), insbesondere Weldon-Werkzeugaufnahmevorrichtung für ein Fräswerkzeug oder einen Kernbohrer,
mit einer Arbeitsspindel (2), die sich entlang der Rotationsachse (A) erstreckt und die einen axial ausgerichteten, zylinderförmigen, einen Aufnahmeradius (R1) aufweisenden Aufnahmeraum (3; 3') aufweist, in den ein zumindest abschnittsweise zylinderförmiger, einen Außenradius (r1) aufweisender Werkzeugschaft (51; 51') durch axiales Bewegen des Werkzeugschaftes (51; 51') bis in eine Montageposition einsetzbar ist, wobei der Werkzeugschaft (51; 51') mindestens eine vom Außenradius (r1) radial nach innen verlagerte Planfläche (52; 52') aufweist, die eine axial verlaufende, einen Übergang der Planfläche (52; 52') zur Zylinderfläche (53; 53`) des Werkzeugschafts bildende Planflächenseite (52a; 52a') aufweist,
mit mindestens einer radial beweglich angeordneten Spannbacke (4; 4'; 4") mit einer planaren Klemmfläche (4b; 4b'; 4b"),
wobei die Werkzeugaufnahmevorrichtung (1) dazu eingerichtet ist, dass in einer ersten Anordnung der Spannbacke (4; 4'; 4") der minimale Abstand (a1) der Klemmfläche (4b; 4b'; 4b") von der Rotationsachse (A) größer oder gleich dem Außenradius (r1) des Werkzeugschaftes (51; 51') ist, und
in einer zweiten Anordnung der Spannbacke (4; 4'; 4") der minimale Abstand (a2) der Klemmfläche (4b; 4b'; 4b") von der Rotationsachse (A) kleiner dem Außenradius (r1) des Werkzeugschaftes (51; 51') ist und die Klemmfläche (4b; 4b'; 4b") in der Montageposition einen Kontaktbereich (52c'; 52c") der Planfläche (52; 52') kontaktiert und der Kontaktbereich (52c'; 52c") von der Planflächenseite (52a; 52a') beabstandet ist.

2. Werkzeugaufnahmevorrichtung gemäß Anspruch 1, **dadurch gekennzeichnet, dass** die Spannbacke (4; 4'; 4") mindestens eine, insbesondere axial in der Klemmfläche (4b; 4b`; 4b") verlaufende, Ausnehmung (4a; 4a') aufweist.

3. Werkzeugaufnahmevorrichtung gemäß Anspruch 2, **dadurch gekennzeichnet, dass** die Ausnehmung (4a; 4a') eine axial verlaufende Rille ist.

4. Werkzeugaufnahmevorrichtung gemäß Anspruch 3, **dadurch gekennzeichnet, dass** die Breite der Rille (4a; 4a'), gemessen in Richtung senkrecht zur Achse A in der Ebene der Klemmfläche (4b, 4b', 4b"), zwischen 1,0 mm und 10,0 mm beträgt, insbesondere zwischen 2,0 mm und 4,0 mm.

5. Werkzeugaufnahmevorrichtung gemäß Anspruch 3 oder 4, **dadurch gekennzeichnet, dass** die Tiefe der Rille (4a; 4a'), gemessen in Richtung senkrecht zur Klemmfläche (4b, 4b', 4b"), zwischen 0,1 mm und 2,0 mm beträgt, insbesondere zwischen 0,2 mm und 0,6 mm.

6. Werkzeugaufnahmevorrichtung nach einem der vorangehenden Ansprüche, **dadurch gekennzeichnet, dass** die Ausnehmung (4a; 4a') sich durch die gesamte Höhe der Klemmfläche (4b; 4b'; 4b") erstreckt.

7. Werkzeugaufnahmevorrichtung nach einem der vorangehenden Ansprüche, **dadurch gekennzeichnet, dass** der minimale Abstand (s) der Kontaktfläche 52c') von der Planflächenseite (52a; 52a') zwischen 0,5 mm bis 5,0 mm beträgt.

8. Werkzeugaufnahmevorrichtung nach einem der vorangehenden Ansprüche, **dadurch gekennzeichnet, dass** die Klemmfläche (4b; 4b'; 4b") eine Kontaktfläche (4c) aufweist, und die Werkzeugaufnahmevorrichtung (1) dazu eingerichtet ist, dass die Kontaktfläche (4c) in der zweiten Anordnung die Planfläche (52; 52`), insbesondere deren Kontaktbereich (52c'), kontaktiert, wobei insbesondere die Kontaktfläche (4c) kleiner ist als die Planfläche (52; 52').

9. Werkzeugaufnahmevorrichtung nach einem der vorangehenden Ansprüche, **dadurch gekennzeichnet, dass** die Planfläche (52; 52`) rechteckförmig ist und eine der Planflächenseite (52a; 52a') gegenüberliegende zweite Planflächenseite (52b; 52b`) aufweist.

10. Werkzeugaufnahmevorrichtung nach Anspruch 9, **dadurch gekennzeichnet, dass** in der zweiten Anordnung die erste Planflächenseite (52a; 52a') die Klemmfläche (4b; 4b`; 4b") nicht berührt und insbesondere die zweite Planflächenseite (52b; 52b') die Klemmfläche (4b; 4b'; 4b") berührt.

11. Werkzeugaufnahmevorrichtung nach einem der vorangehenden Ansprüche, **dadurch gekennzeichnet, dass** der Kontaktbereich (52c') kleiner ist als die Planfläche (52; 52').

12. Standwerkzeugmaschine, insbesondere Bohrmaschine, Fräsmaschine oder Kernbohrmaschine, mit einer Werkzeugaufnahmevorrichtung (1) nach einem der vorangehenden Ansprüche.

13. Werkzeugaufnahmesystem (100) für ein um eine Rotationsachse rotierbares Werkzeug (50), das eine Werkzeugaufnahmevorrichtung (1), insbesondere gemäß einem der Patentansprüche 1 bis 11, und ein Werkzeug (50) mit einem Werkzeugschaft (51; 51') aufweist,
wobei die Werkzeugaufnahmevorrichtung eine Arbeitsspindel (2) aufweist, die sich entlang der Rotationsachse (A) erstreckt und die einen axial ausgerichteten, zylinderförmigen, einen Aufnahmeradius (R1) aufweisenden Aufnahmeraum (3; 3') aufweist, in den der zumindest abschnittsweise zylinderförmiger, einen Außenradius (r1) aufweisende Werkzeugschaft (51; 51') durch axiales Bewegen des Werkzeugschaftes (51; 51') bis in eine Montageposition einsetzbar ist, wobei der Werkzeugschaft (51; 51') mindestens eine vom Außenradius (r1) radial nach innen verlagerte Planfläche (52; 52`) aufweist, die eine axial verlaufende, einen Übergang der Planfläche (52; 52') zur Zylinderfläche (53; 53`) des Werkzeugschafts bildende Planflächenseite (52a; 52a') aufweist,
wobei die Werkzeugaufnahmevorrichtung mindestens eine radial beweglich angeordnete Spannbacke (4; 4'; 4") mit einer planaren Klemmfläche (4b; 4b'; 4b") aufweist,
wobei die Werkzeugaufnahmevorrichtung (1) dazu eingerichtet ist, dass in einer ersten Anordnung der Spannbacke (4; 4'; 4") der minimale Abstand (a1) der Klemmfläche (4b; 4b'; 4b") von der Rotationsachse (A) größer oder gleich dem Außenradius (r1) des Werkzeugschaftes (51; 51') ist, und
in einer zweiten Anordnung der Spannbacke (4; 4'; 4") der minimale Abstand (a2) der Klemmfläche (4b; 4b'; 4b") von der Rotationsachse (A) kleiner dem Außenradius (r1) des Werkzeugschaftes (51; 51') ist und die Klemmfläche (4b; 4b'; 4b") in der Montageposition einen Kontaktbereich (52c'; 52c") der Planfläche (52; 52') kontaktiert und der Kontaktbereich (52c'; 52c") von der Planflächenseite (52a; 52a') beabstandet ist.

14. Verfahren zur Herstellung der Werkzeugaufnahmevorrichtung (1) gemäß einem der vorangehenden Ansprüche 1 bis 11, aufweisend den Schritt, dass die Form der Klemmfläche (4b; 4b'; 4b") der mindestens einen Spannbacke (4; 4'; 4") so gebildet wird, dass die Klemmfläche (4b; 4b'; 4b") in der Montageposition einen Kontaktbereich (52c') der Planfläche (52; 52') kontaktiert und der Kontaktbereich (52c`) und von deren Planflächenseite (52a; 52a') beabstandet ist.

15. Verfahren gemäß Anspruch 14, wobei die Form der Klemmfläche (4b; 4b') der mindestens einen Spannbacke (4; 4') durch Fräsen einer Ausnehmung (4a; 4a') in die Klemmfläche (4b; 4b') gebildet wird.
